# EUROPEAN PATENT SPECIFICATION

(11) **EP 4 004 415 B1**
(45) Date of publication and mention of the grant of the patent: **14.06.2023**
(21) Application number: 20740646.3
(22) Date of filing: 22.07.2020
(51) Int. Cl.: F16K 31/02, F24D 19/10, G05D 23/19

(54) **VALVE ACTUATOR**
VENTILAKTUATOR
ACTIONNEUR DE SOUPAPE

(30) Priority: 23.07.2019 EP 19187717
(43) Date of publication of application: 01.06.2022
(73) Proprietor: Danfoss A/S, 6430 Nordborg (DK)
(72) Inventor: FREDERIKSEN, Bjarne, 6430 Nordborg (DK); VOIGT, Soren Tellefsen Herold, 6430 Nordborg (DK)
(74) Representative: Keil & Schaafhausen Patentanwälte PartGmbB
(86) International application number: PCT/EP2020/070626
(87) International publication number: WO 2021/013869

(56) References cited:
- DE-A1-102004 010 325
- DE-C1- 10 112 703
- US-A- 5 897 055

## Description

The present invention relates to a valve actuator comprising a housing arrangement, an actuating element having a moveable actuation member, and electric supply means connected to the actuating element.

Such a valve actuator is known, for example, from DE 10 2004 024 966 B4.

Such a valve actuator is, for example, used to control a valve of a radiator or another heat exchanger of a heating or cooling system. The moveable actuation member is intended to act on a counter part of the respective valve, for example a pin or the like which is operatively connected to a valve element of the valve.

The actuating element is driven or controlled by electric energy which is supplied via the electric supply means. When the actuating element is in form of wax element (or any other thermal expansion element) a supply of electric energy increases the temperature of the wax element so that the filling of the wax element expands and presses the actuation member outwardly. Another possible form of the actuating element can be an electric motor, for example, in form of a stepper motor, in which the actuation member is moved when the motor rotates.

Independently of the form of the actuating element electric power has to be supplied to the actuating element.

A device which is supplied with electric energy is usually classified with an IP code according to European standard EN60529.

DE 101 12 703 C1 discloses a heating circuit valve adjuster device having an outer housing that surrounds a thermo-mechanical operating element. An adjuster element in the outer housing is driven by the operating element.

An actuator described in DE 10 2004 010 325 A1 comprises a thermostatic working element that can be heated by means of an electric resistor. A lower part of a housing comprises an essentially cylindrical guiding element for a transferring element. The transferring element can be driven by the working element.

US 5,897,055 A shows another actuator with an electrically heatable operating element.

The object underlying the present invention is to provide a reliable, simple, and cost-effective way to reach a high IP code.

This object is solved with a valve actuator with the features of claim 1.

The valve actuator comprises a housing arrangement, an actuating element having a movable actuation member, and electric supply means connected to the actuating element.

The housing arrangement comprises a static housing part and a moveable housing part, wherein the actuation member acts on the moveable housing part, and dynamic sealing means are arranged between the static housing part and the moveable housing part.

In more detail, the housing arrangement comprises a first housing part enclosing an interior space thereof, wherein the interior space accommodates and supports the actuating element and a connection of the electric supply means to the actuating element. The housing arrangement further comprises a second housing part.

The first housing part comprises a cylindrical opening from the interior space to an outside of the first housing part, the cylindrical opening having a longitudinal axis.

The second housing part is moveable with respect to the first housing part along the longitudinal axis by moving the actuation member.

The dynamic sealing means are arranged between the first housing part and the second housing part.

An engagement protrusion of the second housing part for abutment of the actuation member extends from the outside of the first housing part into the cylindrical opening, wherein the actuation member extends (from the other side, i.e. from the interior space) into the cylindrical opening and abuts the engagement protrusion therein.

Especially, the dynamic sealing is arranged between a radial outer surface of the engagement protrusion and a wall of the cylindrical opening.

The interior space of the first housing part is sealed and encapsulated from the outside of the first housing part.

In this way, the functionality of the valve actuator can be kept more or less unchanged in relation to existing actuators having a lower IP class, i.e. the moveable actuation member can still be used to act on a valve. However, the actuating element is now sealed by the moveable housing part and the dynamic sealing means. The term "dynamic sealing means" is chosen to simplify the explanation. The dynamic sealing means form a seal between two parts which can move relatively to each other.

The cylindrical opening ensures reliable guidance of the engagement protrusion and/or the actuation member. Furthermore, an inner wall of the cylindrical opening can be sealed in an easy and cost-efficient manner.

In general, only the interior of the first housing part must be sealed and encapsulated. The actuation member and the connection of the electric supply means to the actuating elements are the parts of the valve actuator that are most sensitive to liquid, for example water. It is an advantage of the invention to focus the sealing effort on this area. Even if the outside of the interior space (of the first housing part) might be an encompassing inner chamber of the valve actuator, which is sealed and encapsulated as well, sealing and encompassing the interior space increases the reliability. However, preferably only the interior of the first housing part is sealed and encapsulated. This reduces the complexity and saves costs.

The second housing part may at least partially extend about the first housing part.

A size of the interior space may be fittingly adapted to a size of the actuating element and the connection of the electric supply means to the actuating elements. With the present invention, the sealed and enclosed space is reduced to a minimum.

As only the interior space of the first housing part, which directly encloses the actuating element and the connection of the electric supply means thereto, must be sealed and enclosed, all sealing and enclosing elements are positioned as centrally as possible. This considerably reduces the risk that sealing and/or enclosing of the interior space is damaged by external forces, impacts, or harmful substances applied from the outside of the valve actuator. For example, even if an outer cover of the valve actuator, which may be additionally provided in order to cover the first housing part and the second housing part, is damaged, the sealing and enclosure of the interior space will remain intact and the valve actuator will remain functional. Apart from that, as the sealing and enclosing elements are positioned very centrally, the freedom for the design of an outward appearance of the valve actuator is increased.

Furthermore, as the size of the interior space is minimal, the actuating element heats up more quickly if being a thermal expansion element.

The present invention allows reaching at least IP 51 classification in a reliable and very cost-efficient manner.

For example, the actuating element may move the actuation member from an idle position thereof to an operation position thereof when electric power is supplied to the actuating element.

The first housing part is the housing part that is the closest to actuating element of all housing parts. The first housing part may directly support the actuating element and the connection of the electric supply means. This means that there are no other parts of the housing are in-between first housing part on the one hand and the actuating element and the connection of the electric power supply means to the actuating element at the other hand. The actuating element may directly abut on the first housing part and/or abut directly on the first housing part via the connection, especially on a wall of the interior space.

Preferably, a cross-section of the cylindrical opening has a circular, elliptical, oval, or oblong-hole shape. For example, the term "cylindrical opening" also includes embodiments in which the cylindrical opening has the shape of an elliptic cylinder.

Additionally or alternatively, at least a part of the actuation member, namely at least the part extending into the cylinder opening, has a circular, elliptical, oval, or oblong-hole shape. Additionally or alternatively, the shape of the part extending into the cylinder opening may correspond to the shape of the cylinder opening. Said part extending into the cylinder might be defined in a maximum stroke position of the actuation element in which the actuation member extends furthest into the cylindrical opening. At least the part extending into the cylinder may be solid.

Preferably, the actuation member acts directly on the engagement protrusion. This means, the actuation member directly abuts on the engagement protrusion. There are no intermediate elements in-between. This leads to a simple and cost-efficient structure.

According to another aspect, a width of the part extending into the cylinder opening (of the actuation member) perpendicular to the longitudinal direction is preferably more than 30 %, more than 40 % of a width a width of the cylindrical opening perpendicular to the longitudinal direction. In other words, the width of the cylindrical opening is small. This leads to a particularly small size of the valve actuator and allows a small size of the dynamic sealing means. Of course, said with of the part extending into the cylinder shall be less than 100 % than said with of the cylindrical opening.

Preferably, the first housing comprises a hollow tube-like protrusion (in other words: a collar-like extension) surrounding the cylindrical opening. This allows further reducing a volume of the interior space, a size of the first housing part, and a mass of the first housing part. This also leads to a less expensive manufacturing. Nevertheless, the cylindrical opening is still long enough along its longitudinal direction to allow reliable guidance of the engagement protrusion and/or the actuation member. Especially, large strokes of the actuation member and hence the engagement protrusion can be obtained in combination with a very compact size of the first housing part and cost-efficient manufacturing. The hollow tube-like protrusion may be of substantially hollow cylindrical shape. Additionally or alternatively, the interior space together with the cylindrical opening may be of substantially bottle-like shape. In this case, the cylindrical opening corresponds to a bottleneck of said shape. An end of the actuating element at the side of the cylindrical opening may partly adapt on a shoulder of the hollow tube-like protrusion.

In one embodiment of the invention, the first housing part is a movable housing part and the second housing part is a stationary housing part. In another embodiment of the invention, vice versa, the first housing is the stationary housing part and the second housing part is the movable housing part.

For example, the valve actuator may comprises valve connector means for fixing the valve actuator to a valve, especially for detachably fixing it to the valve. The stationary housing part then may be the one of the first housing part and the second housing part, which is not movable with respect to the valve when the valve actuator is fixed to the valve. The actuating element is configured to move the movable housing part from an idle position thereof to an operation position thereof when electric power is supplied to the actuating element, in particular by moving the actuation member abutting the engagement protrusion.

The valve connecting means may be provided at a valve end side of the valve actuator in the longitudinal direction. Preferably, the cylindrical opening of the first housing part faces to the valve end side. Hence, the actuation member faces towards the valve if the valve actuator is fixed to the valve.

According to a further aspect, the valve actuator may comprise an elastic member pressing the movable housing part into an idle position thereof. This ensures that the movable housing part is brought back to its idle position if no electric power is supplied to the actuating element.

In an embodiment of the invention, the dynamic sealing means are in form of an O-ring, an X-ring, a lip-ring, a 2K-moulding integral with the first housing part and/or the second housing part, and/or a grease package. All these sealing means are able to seal between two moving parts and they are simple to install. More preferably, the dynamic sealing means is arranged in an annular groove provided in the radial outer surface of the engagement protrusion. For example, the dynamic sealing means may consist of a single O-ring arrange in said annular groove. This is a very inexpensive but yet reliable way to implement the sealing function. According to the advantages pointed out above, the present invention allows that the O-ring is very small.

In an embodiment of the invention, the first housing part comprises a first member and a second member connected to the first member, and the second housing part, wherein the second housing part includes a third member, wherein the first member, the second member, and the engagement protrusion, and the dynamic sealing means delimit the sealed and encapsulated interior space. As noted above, said interior space accommodates the actuating element and a connection of the electric supply means to the actuating element. In other words the first member, the second member, and (the engagement protrusion of) the third member form a sealed space and encapsulate the actuating element and the connection of the electric supply means to the actuating element. The first member and the second member facilitate the mounting of the valve actuator. When the first member and the second member are separated from each other, it is rather simple to insert the actuating element. Thereafter the first member and the second member can be connected, for example by means of a snap connection. However, other connecting possibilities can be used. The first member and the second member can as well be glued or welded together or they can be connected by means of a press fit. At least some of these possibilities have the function of connecting and of sealing. The third member is mounted in moveable relation to the first and second members. In particular, the second member is fixed to the first member. It may be permanently fixed to the first member. This increases the reliability and reduces the risk of leakages. Alternatively, the second member may be detachably fixed to the member. This facilitates maintenance of the valve actuator. Preferably, the engagement portion is formed in one piece with the third member. The cylindrical opening may be formed in the second member.

In a more preferred embodiment, the third member further comprises a pressing element for acting on a valve pin.

In an embodiment of the invention, the electric supply means are guided through the first housing part. The electric supply means do not affect the cooperation between the moveable housing part and the static housing part. In particular, the electrical supply means may be guided from the outside of the first housing part into the interior space through the first housing part.

In an embodiment of the invention, only the actuating element, the connection of the electric supply means to the actuating element, and an end part of the electric supply means, which is guided through to first housing part, are positioned within the sealed and enclosed interior space. Hence, the volume of the interior space and the sealing effort can be reduced to a minimum. At the one hand, reducing a total surface to be sealed reduces the risk of leakages of the interior space. Hence, the valve actuator is more reliable. On the other hand, reducing the volume of the sealed and enclosed space and the total sealing surface reduces the costs for manufacturing. Said end part of the electric supply means may include the connection thereof to the actuation element. For example, said connection may be formed integrally with said end part.

In an embodiment of the invention, at least one of first member and second member comprises at least one groove intersecting a connection area between the first member and the second member, wherein the electric supply means are guided through the at least one groove in a sealed manner. The use of two members to form the first housing part has the additional effect that the electric supply means can easily be guided into the sealed space without the need to provide a hole or the like in one of the members.

More preferably, the at least one groove extends at least substantially parallel to the longitudinal axis. This eases squeezing the electric supply means into the at least one groove when fixing the second member to the first member.

In an embodiment of the invention, static sealing means are arranged between the first member and the second member. The static sealing means can have a rather simple form, since they are used to form a seal between two members which do not move in relation to each other. More preferably, the first housing consists of the first member, the second member, and the static sealing means only. This ensures low complexity as well as quick, easy, and cost-efficient manufacturing. Further, the simple structure reduces the risk of leakages.

In an embodiment of the invention the static sealing means are formed by an O-ring, an X-ring, a lip-ring, a 2K-moulding integral with the first member and/or the second member, a glue connection, a welded connection, or a press fit. All these static sealing means are able to tighten the sealed space. The static sealing member may consist of one element or of several elements. In terms of the present disclosure, "several" means "at least two".

In an embodiment of the invention, the static sealing means are (especially: the O-ring is) located between a radial inner face of one of the first member and the second member and a radial outer face of the other of the first member and the second member, wherein at least one of the radial inner face and the radial outer face comprises a radial protrusion arrangement pointing in a direction to the other of radial inner face and radial outer face. The protrusion arrangement may be configured for pressing the electrical supply means into the at least one groove. In particular, the protrusion arrangement may press the electrical supply means into the at least one groove when the second member is fixed to the first member. The interaction of the protrusion arrangement with the electrical supply means and the at least one groove may improve or establish the sealing between the first member and the second member at a region including the at least one groove. Additionally or alternatively, the protrusion arrangement may extend parallel to the at least one groove. When the electric supply means are guided through the zone, in which the static sealing means is arranged, there is a slight risk that the sealing is not as perfect as desired. The protrusion arrangement, which can have, for example, two protrusions, can be used to press the static sealing means around the electric supply means, so that a larger sealing zone between the static sealing means and the electric supply means is achieved. In addition, it is possible to add sealings, for example silicon, grease or glue, in order to close small gaps which could possibly remain. For example, the protrusion arrangement may comprise at least one rib corresponding to the at least one groove.

Additionally or alternatively, the at least one groove may comprise a key-hole feature. The key-hole feature prevents the electric supply means from moving out of the at least one groove after being positioned therein. Thus, it facilitates fixing the second member and the first member together. Furthermore, it holds the electric supply means in position for best interaction with the protrusion arrangement. Most preferably, a shape of the at least one key-hole feature is adapted to a shape of the at least one rib. This improves the sealing.

For example, the key-hole feature includes at least one locking nose at a sidewall of the at least one groove. The locking nose is configured such that the electrical supply means (at least a part of the electrical supply means) can be snapped in the at least one groove. More preferably, the key-hole feature comprises two locking noses at opposite sidewalls of the at least one groove. The at least one rib of the protrusion arrangement may at least partly protrude between the two locking noses when the first member and second member are fixed together.

In addition or alternatively, the electric supply means may be provided with individual sealing means. Such individual sealing means can be provided for each wire of the electric supply means to individually form a seal around the wires. In this case, the first housing may consist of the first member, the second member, the static sealing means, and the individual sealing means only. This ensures low complexity as well as quick, easy, and cost-efficient manufacturing. Further, the simple structure reduces the risk of leakages.

In an embodiment of the invention, the individual sealing means are integral with the static sealing means. This facilitates the assembly of the actuator.

An embodiment of the invention will now be described in more detail with reference to the drawing, in which:
- Fig. 1: shows a schematic sectional view of a valve actuator of a normally closed valve,
- Fig. 2: shows a second member of the valve actuator in perspective view,
- Fig. 3: shows a first member of the valve actuator in a perspective view from the bottom, and
- Fig. 4: shows a first embodiment of electric supply means,
- Fig. 5: shows a second embodiment of electric supply means, and
- Fig. 6: shows a schematic sectional view of a valve actuator of a normally open valve.

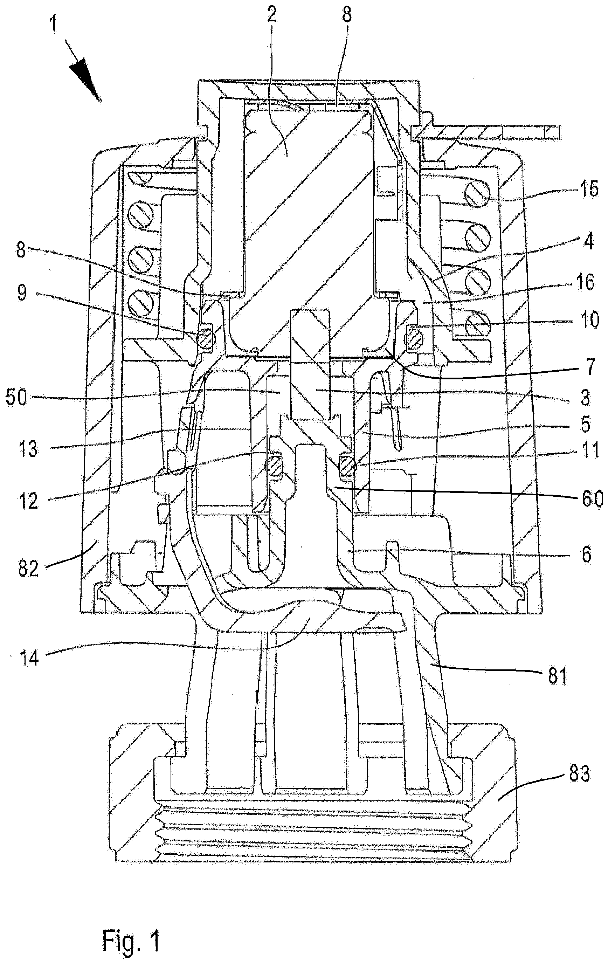

Fig. 1 shows schematically a valve actuator 1 which is in the present form used to control a normally closed valve which is opened upon actuation of the actuator.

The valve actuator 1 comprises a housing arrangement which will be described later, and an actuating element 2 having a moveable actuation member 3.

The actuating element 2 can be, for example, in form of a wax element or any other thermal expansion element. When the temperature of the wax element is increased, the filling of the wax element expands and moves the actuation member 3.

The actuating element 2 can alternatively be in form of an electric motor, e.g. in form of a stepper motor or in form of a DC-motor. In any case, a supply of electric energy is required to operate the valve actuator 1.

The housing arrangement of the valve actuator 1 comprises a moveable housing part which is formed in the present case by a first member 4 and a second member 5. In general, the first housing part comprises the first member 4 and the second member 5. Furthermore, the housing arrangement comprises a static housing part which is formed by a third member 6. In this embodiment, the moveable housing part forms the first housing part and the static housing part forms a second housing part.

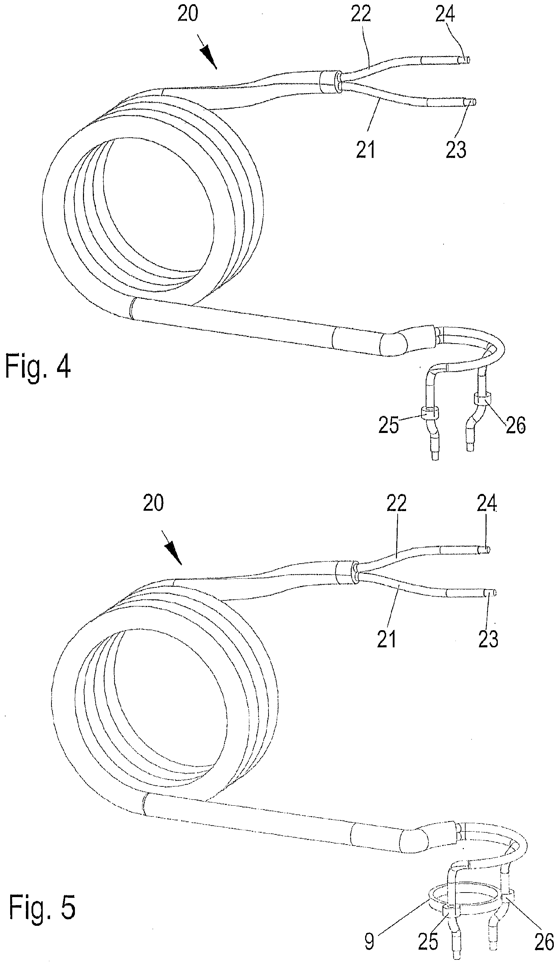

The first member 4, the second member 5 and the third member 6 form a sealed space 7 and encapsulate the actuating element 2 and a connection area 8 in which a connection of the electric supply means to the actuating element 2 is arranged. The electric supply means are not shown in Fig. 1, but in Fig. 4 and 5 only. The space 7 is an interior space of the first housing part. Especially, the interior space 7 of the first housing part is sealed an encapsulated from an outside of the interior space 7.

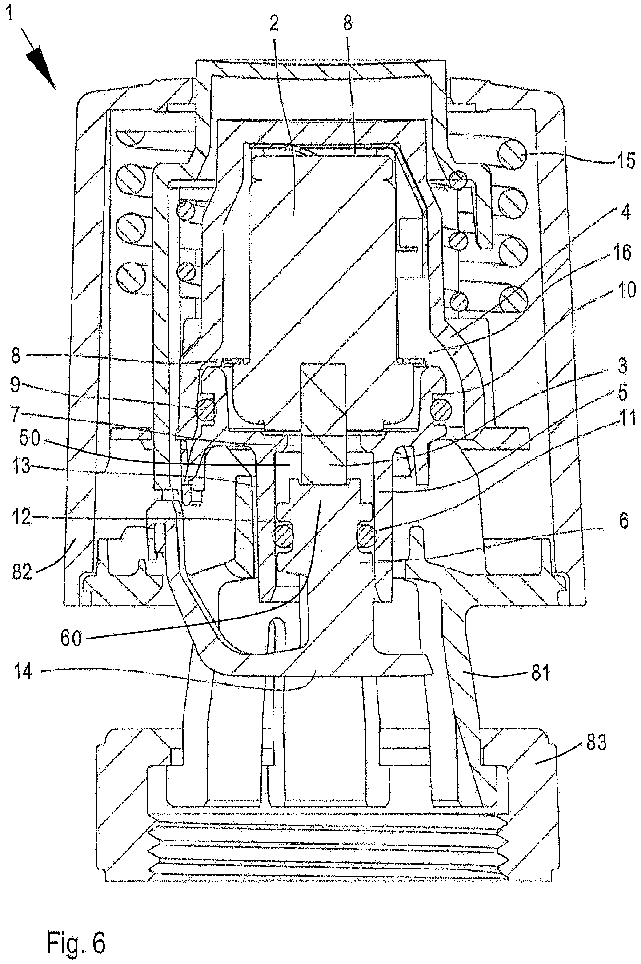

The first member 4 and the second member 5 do not move in relation to each other. During the operation of the valve actuator 1 they move together. Thus, the part of the housing arrangement having the first member 4 and the second member 5 is termed "moveable housing part", whereas the third member 6 which remains stationary in relation to the second member 5 is termed "static housing part". This is the case in an actuator for a normally closed valve, i.e. a valve which is closed when the actuator is not operated. In a normally open valve, the relation between the moveable housing part and the static housing part is changed as will be explained below with reference to Fig. 6.

As can be seen in Fig. 1, a static sealing means 9 is arranged between the first member 4 and the second member 5. The static sealing means 9 can be, for example, in form of an O-ring. The static sealing mean can be placed in a seal groove 10 on the radial outer face of the second member 5 before the second member 5 is connected to the first member 4. Such a connection can be made, for example, by a snap connection. Alternatively, the connection and sealing can be made in other ways, for example, by gluing or welding or by a press fit. The static sealing means 9 (or the static sealing provided by the way of connection itself) provide a water tightness.

Dynamic sealing means 11 are arranged between the moveable housing part, more precisely between the second member 5, and the static housing part, i.e. the third member 6. The third member 6 can be part of a socket with which the actuator 1 is fixed to a valve. The dynamic sealing means 11 are in form of an O-ring as well. However, the dynamic sealing means 11 can have other forms, for example, an X-ring, a lip-ring, provided at the static housing part and/or the moving housing part or a grease package. The static sealing means 11 form a moveable seal which seals independently of the position of the third member 6 in relation to the second member 5. Furthermore, the dynamic seal 11 seals during a movement of the second member 5 in relation to the third member 6. In this way, it can be ensured that the sealed space 7 is always sealed even when the second member 5 moves in relation to the third member 6.

The dynamic seal 11 is arranged in a seal groove 12 on a circumferential wall of the third member 6. The second member 5 comprises a hollow tube-like protrusion 13 in which the third member 6 is inserted. An interior of the hollow tube-like protrusion constitutes a cylindrical opening 50 of the interior space 7. The second member 5 comprises in addition a pressing element 14 which acts on the valve.

When electric energy is supplied to the actuating element 2 and the actuation member 3 of the actuation element 2 is moved out of the actuation element 2, the first member 4 together with the second member 5 is lifted against the force of a spring 15 so that the pressing element 14 is moved away from the valve (in Fig. 1 upwardly), so that the valve can open.

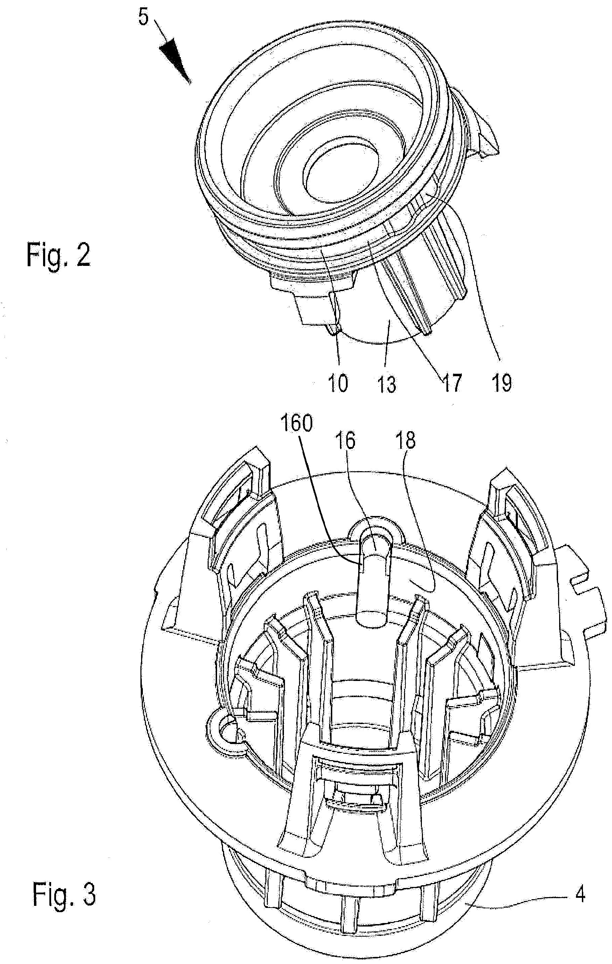

In order to supply electric energy to the actuating element 2, electric supply means in form of wires (shown in Fig. 4 and 5) are guided through the moveable or first housing part 4, 5. To this end, a wire groove 16 is provided for each of the wires. However, it is also possible that a wire groove 16 is provided for a plurality of wires. The wire groove 16 is provided in the first member 4. However, the wire groove 16 can likewise be provided in the second member 5 or it can be provided in both the first member 4 and the second member 5. The wire groove 16 can also be seen in Fig. 3.

The valve actuator 1 further comprises a housing base 81 and a cover 82. The cover 82 is snap-fitted to the housing base 81. Furthermore, the valve actuator 1 comprises a valve connector means that is provided on a valve end side of the valve actuator 1. For example, the valve connector means includes the union nut 83. The cylindrical opening 50 faces towards the valve end side.

The cover 82 covers the first housing part and (at least partially) the third member 6. The first housing part is surrounded by the base 81 and the cover 82. In other words, the first housing part is arranged in a housing space formed by base 81 and the cover 82. The outside of the interior space (of the first housing part) is at least partly positioned within said housing space.

However, the housing space as such is not sealed against an outside of the cover 82 in this embodiment. Only a core of the valve actuator 1, namely the interior space 7 of the first housing part, is sealed and enclosed. However, the cover 82 protects the first housing part and the second housing part from mechanical damages.

Fig. 2 shows the second member 5 in a perspective view. The seal groove 10 in which the static sealing means 9 is arranged, can clearly be seen. The bottom of the seal groove 10 forms a radial outer face 17 and the first member 4 forms a radial inner face 18. The static sealing means 9 is arranged between the radial outer face 17 and the radial inner face 18.

As can be seen in Fig. 2, the second member 5 comprises a radial protrusion arrangement 19 on the radial outer face 17 protruding in a direction towards the radial inner face 18. This protrusion arrangement 19, which can be in form of a pair of protrusions, is arranged in vicinity to the wire groove 16 through which the electric supply means are guided. The protrusion arrangement 19 improves the tightness of the static sealing means 9. The protrusion arrangement 19 presses the static sealing means 9 around the wires of the electric supply means to minimize any remaining gaps between the static sealing means 9 and the wire or wires of the electric supply means. If there are any further gaps remaining, they can be closed by other sealings, for example, silicon, grease, glue, or the like.

Each one of the grooves 16 comprises a key-hole feature. Each key-hole feature comprises two locking noses 160 at opposite sidewalls of the respective groove 16. Once the respective part of the electrical supply means 20 is positioned within the corresponding groove 16, said part snap-in behind the locking noses 160 of this groove 16 and the locking noses 160 prevents the part from unintentionally moving of this groove 16.

The interaction of ribs of the protrusion arrangement 19 and the grooves 16 with the key-hole features ensures that the electric supply means 20 are tightly held and squeezed between the first member 4 and the second member 5 when the second member 5 is fixed to the first member 4. Thus, proper sealing of the first housing part is also ensured at a feed-through of the electrical supply means 20 through first housing part.

Fig. 4 shows a first example of electric supply means 20. The electric supply means 20 comprises two wires 21, 22 having a connecting end 23, 24 for supply voltage. The other ends are to be connected to the actuating element 2.

The other end of the wires is provided with individual sealing means 25, 26 which can be used, for example, when the wires are arranged in grooves without the protrusion arrangement 19.

Fig. 5 shows a second example of electric supply means 20.

In Fig. 5 the individual sealing means 25, 26 are combined with the static sealing means 9 in order to facilitate the assembly of the actuator 1.

Fig. 6 shows an actuator for a normally open valve. The same and similar parts are denoted with the same reference numerals.

In contrast to the embodiment illustrated in connection with Fig. 1, the "moveable housing part" and the "static housing part" have been reversed. In other words, in the actuator shown in Fig. 6 the static housing part is formed by the first member 4 and the second member 5, whereas the moving housing part is formed by the third member 6. In other words, in the embodiment shown in Fig. 6, the first housing part is the static housing part. When the actuation member 3 is moved out of the actuating element 2, the moveable housing part, i.e. the third member 6, is shifted towards the valve to move the pressing element 14 against the valve as well, so that the pressing element 14 can act on a valve pin (not shown).

The function of the dynamic sealing means 11 and of the static sealing means 9 remains unchanged.

## Claims

1. Valve actuator (1) comprising a housing arrangement, an actuating element (2) having a movable actuation member (3), and electric supply means (20) connected to the actuating element (2),
wherein the housing arrangement comprises a first housing part (4, 5) enclosing an interior space (7) of the first housing part (4, 5), wherein the interior space (7) accommodates and supports the actuating element (2) and a connection (8) of the electric supply means (20) to the actuating element (2),
wherein the housing arrangement further comprises a second housing part (6),
wherein the first housing part (4, 5) comprises a cylindrical opening (50) from the interior space (7) to an outside of the first housing part (4, 5), the cylindrical opening (50) having a longitudinal axis, wherein the second housing part (6) is moveable with respect to the first housing part (4, 5) along the longitudinal axis by moving the actuation member (3),
wherein dynamic sealing means (11) are arranged between the first housing part (4, 5) and the second housing part (6), and
wherein the interior space (7) of the first housing part (4, 5) is sealed and encapsulated from the outside of the first housing part (4, 5),
**characterized in that** an engagement protrusion (60) of the second housing part (6) for abutment of the actuation member (3) extends from the outside of the first housing part (4, 5) into the cylindrical opening (50), wherein the actuation member (3) extends into the cylindrical opening (50) and abuts the engagement protrusion (60) therein, and
that the dynamic sealing (11) is arranged between a radial outer surface of the engagement protrusion (60) and a wall of the cylindrical opening (50).

2. Valve actuator (1) according to claim 1, **characterized in that** the first housing part (4, 5) comprises a hollow tube-like protrusion (13) surrounding the cylindrical opening (50).

3. Valve actuator (1) according any one of the preceding claims, **characterized in that**
• either the first housing part (4, 5) is a moveable housing part and the second housing part (6) is a stationary housing part
• or the first housing part (4, 5) is the stationary housing part and the second housing part (6) is the moveable housing part.

4. Valve actuator (1) according to any one of the preceding claims **characterized in that** the dynamic sealing means (11) are in form of an O-ring, a X-ring, a lip-ring, a 2K-moulding integral with the first housing part (4, If 5and/or the second housing part (6), and/or a grease package.

5. Valve actuator (1) according to any one of the preceding claims, **characterized in that** the first housing part (4, 5) comprises a first member (4) and a second member (5) connected to the first member (4), and that the second housing part (6) comprises a third member (6) comprising the engagement protrusion (6), wherein the first member (4), the second member (5), the engagement protrusion (60), and the dynamic sealing means (11) delimit the sealed and encapsulated interior space (7).

6. Valve actuator (1) according to any one of the claims 5, **characterized in that** static sealing means (9) are arranged between the first member (4) and the second member (5).

7. Valve actuator (1) according to claim 6, **characterized in that** the static sealing means (9) are formed by an O-Ring, a X-ring, a lip-ring, a 2K-moulding integral with the first member (5) and/or the second member (6), a welding or gluing connection, and/or a snap fit.

8. Valve actuator (1) according to any one of the preceding claims, **characterized in that** the electrical supply means (20) are guided from the outside of the first housing part (4, 5) into the interior space (7) through the first housing part (4, 5).

9. Valve actuator (1) according to claim 8 and any one of claims 5 to 7, **characterized in that** at least one of first member (4) and second member (5) comprises at least one groove (16) intersecting a connection area between the first member (4) and the second member (5), wherein the electric supply means (20) are guided through the at least one groove (16) in a sealed manner.

10. Valve actuator (1) according to claim 9, **characterized in that** the at least one groove (16) extends at least substantially parallel to the longitudinal axis.

11. Valve actuator (1) according to claim 6 and any one of the claims 9 and 10, **characterized in that** the static sealing means (9) are located between a radial inner face (18) of one of the first member (4) and the second member (5) and a radial outer face (17) of the other of the first member (4) and the second member (5), wherein at least one of the radial inner face (18) and the radial outer face (17) comprises a radial protrusion arrangement (19) extending parallel to the at least one groove (16) and radially pointing in a direction to the other of radial inner face (18) and radial outer face (17) for pressing the electrical supply means (20) into the at least one groove (16).

12. Valve actuator (1) according to any one of claims 8 to 11, **characterized in that** the electric supply means (20) are provided with individual sealing means (25, 26).

13. Valve actuator (1) according to claim 12 and any one of claims 6 to 11, **characterized in that** the individual sealing means (25, 26) are integral with the static sealing means (9).

14. Valve actuator (1) according to any one of the preceding claims, **characterized in that** a cross-section of the cylindrical opening (50) has a circular, elliptical, oval, or oblong-hole shape.

15. Valve actuator (1) according to any one of the preceding claims for a valve, **characterized in that** the valve actuator (1) further comprises valve connector means (62) for fixing the valve actuator (1) to the valve, wherein the valve connecting means (62) are provided at a valve end side of the valve actuator (1) in the longitudinal direction, wherein the cylindrical opening (50) of the first housing part (4, 5) faces to the valve end side.

## Patentansprüche

1. Ventilaktuator (1), umfassend eine Gehäuseanordnung, ein Betätigungselement (2) mit einem bewegbaren Betätigungsglied (3) und einem mit dem Betätigungselement (2) verbundenen elektrischen Versorgungsmittel (20),
wobei die Gehäuseanordnung einen ersten Gehäuseteil (4, 5) umfasst, der einen Innenraum (7) des ersten Gehäuseteils (4, 5) umschließt, wobei der Innenraum (7) das Betätigungselement (2) und eine Verbindung (8) des elektrischen Versorgungsmittels (20) mit dem Betätigungselement (2) aufnimmt und trägt,
wobei die Gehäuseanordnung ferner ein zweites Gehäuseteil (6) umfasst, wobei das erste Gehäuseteil (4, 5) eine zylindrische Öffnung (50) von dem Innenraum (7) zu einer Außenseite des ersten Gehäuseteils (4, 5) umfasst, wobei die zylindrische Öffnung (50) eine Längsachse aufweist, wobei das zweite Gehäuseteil (6) in Bezug auf das erste Gehäuseteil (4, 5) durch Bewegen des Betätigungsglieds (3) entlang der Längsachse bewegbar ist,
wobei ein dynamisches Dichtungsmittel (11) zwischen dem ersten Gehäuseteil (4, 5) und dem zweiten Gehäuseteil (6) angeordnet ist, und
wobei der Innenraum (7) des ersten Gehäuseteils (4, 5) von der Außenseite des ersten Gehäuseteils (4, 5) abgedichtet und eingekapselt ist,
**dadurch gekennzeichnet, dass** sich ein Eingriffsvorsprung (60) des zweiten Gehäuseteils (6) zur Anlage des Betätigungsglieds (3) von der Außenseite des ersten Gehäuseteils (4, 5) in die zylindrische Öffnung (50) hinein erstreckt, wobei sich das Betätigungsglied (3) in die zylindrische Öffnung (50) hinein erstreckt und dort an dem Eingriffsvorsprung (60) anliegt, und
dass die dynamische Dichtung (11) zwischen einer radialen Außenfläche des Eingriffsvorsprungs (60) und einer Wand der zylindrischen Öffnung (50) angeordnet ist.

2. Ventilaktuator (1) gemäß Anspruch 1, **dadurch gekennzeichnet, dass** das erste Gehäuseteil (4, 5) einen hohlen rohrförmigen Vorsprung (13) umfasst, der die zylindrische Öffnung (50) umgibt.

3. Ventilaktuator (1) gemäß einem der vorhergehenden Ansprüche, **dadurch gekennzeichnet, dass**
• entweder das erste Gehäuseteil (4, 5) ein bewegbares Gehäuseteil und das zweite Gehäuseteil (6) ein feststehendes Gehäuseteil ist
• oder das erste Gehäuseteil (4, 5) das feststehende Gehäuseteil und das zweite Gehäuseteil (6) das bewegbare Gehäuseteil ist.

4. Ventilaktuator (1) gemäß einem der vorhergehenden Ansprüche, **dadurch gekennzeichnet, dass** das dynamische Dichtungsmittel (11) in Form eines O-Rings, eines X-Rings, eines Lippenrings, eines mit dem ersten Gehäuseteil (4, 5) und/oder dem zweiten Gehäuseteil (6) einstückigen 2K-Gussstücks und/oder einer Fettpackung vorhanden ist.

5. Ventilaktuator (1) gemäß einem der vorhergehenden Ansprüche, **dadurch gekennzeichnet, dass** das erste Gehäuseteil (4, 5) ein erstes Element (4) und ein mit dem ersten Element (4) verbundenes zweites Element (5) umfasst und dass das zweite Gehäuseteil (6) ein drittes Element (6) umfasst, das den Eingriffsvorsprung (6) umfasst, wobei das erste Element (4), das zweite Element (5), der Eingriffsvorsprung (60) und das dynamische Dichtungsmittel (11) den abgedichteten und eingekapselten Innenraum (7) begrenzen.

6. Ventilaktuator (1) gemäß einem der Ansprüche 5, **dadurch gekennzeichnet, dass** ein statisches Dichtungsmittel (9) zwischen dem ersten Element (4) und dem zweiten Element (5) angeordnet ist.

7. Ventilaktuator (1) gemäß Anspruch 6, **dadurch gekennzeichnet, dass** das statische Dichtungsmittel (9) durch einen O-Ring, einen X-Ring, einen Lippenring, ein mit dem ersten Element (5) und/oder dem zweiten Element (6) einstückiges 2K-Gussstück, eine Schweiß- oder Klebeverbindung und/oder eine Schnappverbindung gebildet wird.

8. Ventilaktuator (1) gemäß einem der vorhergehenden Ansprüche, **dadurch gekennzeichnet, dass** das elektrische Versorgungsmittel (20) von der Außenseite des ersten Gehäuseteils (4, 5) durch das erste Gehäuseteil (4, 5) hindurch in den Innenraum (7) geführt wird.

9. Ventilaktuator (1) gemäß Anspruch 8 und einem der Ansprüche 5 bis 7, **dadurch gekennzeichnet, dass** mindestens eines des ersten Elements (4) und des zweiten Elements (5) mindestens eine Nut (16) umfasst, die einen Verbindungsbereich zwischen dem ersten Element (4) und dem zweiten Element (5) schneidet, wobei das elektrische Versorgungsmittel (20) abgedichtet durch die mindestens eine Nut (16) hindurch geführt wird.

10. Ventilaktuator (1) gemäß Anspruch 9, **dadurch gekennzeichnet, dass** die mindestens eine Nut (16) mindestens im Wesentlichen parallel zur Längsachse verläuft.

11. Ventilaktuator (1) gemäß Anspruch 6 und einem der Ansprüche 9 und 10, **dadurch gekennzeichnet, dass** sich das statische Dichtungsmittel (9) zwischen einer radialen Innenfläche (18) eines des ersten Elements (4) und des zweiten Elements (5) und einer radialen Außenfläche (17) des anderen des ersten Elements (4) und des zweiten Elements (5) befindet, wobei mindestens eine der radialen Innenfläche (18) und der radialen Außenfläche (17) eine radiale Vorsprungsanordnung (19) umfasst, die sich parallel zu der mindestens einen Nut (16) erstreckt und radial in eine Richtung zu der anderen der radialen Innenfläche (18) und der radialen Außenfläche (17) zeigt, um das elektrische Versorgungsmittel (20) in die mindestens eine Nut (16) zu drücken.

12. Ventilaktuator (1) gemäß einem der Ansprüche 8 bis 11, **dadurch gekennzeichnet, dass** das elektrische Versorgungsmittel (20) mit einzelnen Dichtungsmitteln (25, 26) versehen sind.

13. Ventilaktuator (1) gemäß Anspruch 12 und einem der Ansprüche 6 bis 11, **dadurch gekennzeichnet, dass** die einzelnen Dichtungsmittel (25, 26) einstückig mit dem statischen Dichtungsmittel (9) integriert sind.

14. Ventilaktuator (1) gemäß einem der vorhergehenden Ansprüche, **dadurch gekennzeichnet, dass** ein Querschnitt der zylindrischen Öffnung (50) eine kreisförmige, elliptische, ovale oder Langlochform aufweist.

15. Ventilaktuator (1) gemäß einem der vorhergehenden Ansprüche für ein Ventil, **dadurch gekennzeichnet, dass** der Ventilaktuator (1) ferner ein Ventilanschlussmittel (62) zum Befestigen des Ventilaktuators (1) an dem Ventil umfasst, wobei das Ventilanschlussmittel (62) an einer Ventilstirnseite des Ventilaktuators (1) in Längsrichtung vorgesehen ist, wobei die zylindrische Öffnung (50) des ersten Gehäuseteils (4, 5) der Ventilstirnseite zugewandt ist.

## Revendications

1. Actionneur de soupape (1) comprenant un ensemble boîtier, un élément d'actionnement (2) ayant un organe actionneur (3) mobile, et des moyens d'alimentation électrique (20) raccordés à l'élément d'actionnement (2),
dans lequel l'ensemble boîtier comprend une première partie de boîtier (4, 5) renfermant un espace intérieur (7) de la première partie de boîtier (4, 5), dans lequel l'espace intérieur (7) reçoit et supporte l'élément d'actionnement (2) et un raccordement (8) des moyens d'alimentation électrique (20) à l'élément d'actionnement (2),
dans lequel l'ensemble boîtier comprend en outre une seconde partie de boîtier (6),
dans lequel la première partie de boîtier (4, 5) comprend une ouverture cylindrique (50) allant de l'espace intérieur (7) à l'extérieur de la première partie de boîtier (4, 5), l'ouverture cylindrique (50) ayant un axe longitudinal,
dans lequel la seconde partie de boîtier (6) peut être déplacée par rapport à la première partie de boîtier (4, 5) le long de l'axe longitudinal en déplaçant l'élément d'actionnement (3),
dans lequel des moyens d'étanchéité dynamiques (11) sont disposés entre la première partie de boîtier (4, 5) et la seconde partie de boîtier (6), et
dans lequel l'espace intérieur (7) de la première partie de boîtier (4, 5) est scellé et isolé par rapport à l'extérieur de la première partie de boîtier (4, 5),
**caractérisé en ce qu'**une saillie de mise en prise (60) de la seconde partie de boîtier (6) venant en butée contre l'élément d'actionnement (3) s'étend de l'extérieur de la première partie de boîtier (4, 5) dans l'ouverture cylindrique (50), l'élément d'actionnement (3) s'étendant dans l'ouverture cylindrique (50) et venant en butée contre la saillie de mise en prise (60) à l'intérieur de celle-ci, et
**en ce que** l'élément d'étanchéité dynamique (11) est disposé entre une surface extérieure radiale de la saillie de mise en prise (60) et une paroi de l'ouverture cylindrique (50).

2. Actionneur de soupape (1) selon la revendication 1, **caractérisé en ce que** la première partie de boîtier (4, 5) comprend une saillie creuse en forme de tube (13) entourant l'ouverture cylindrique (50).

3. Actionneur de soupape (1) selon l'une quelconque des revendications précédentes, **caractérisé en ce que**
• soit la première partie de boîtier (4, 5) est une partie mobile de boîtier et la seconde partie de boîtier (6) est une partie fixe de boîtier
• soit la première partie de boîtier (4, 5) est la partie fixe de boîtier et la seconde partie de boîtier (6) est la partie mobile de boîtier.

4. Actionneur de soupape (1) selon l'une quelconque des revendications précédentes **caractérisé en ce que** les moyens d'étanchéité dynamiques (11) se présentent sous la forme d'un joint torique, d'un joint en X, d'un joint à lèvres, d'un moulage 2K solidaire de la première partie de boîtier (4, 5) et/ou de la seconde partie de boîtier (6), et/ou d'un paquet de graisse.

5. Actionneur de soupape (1) selon l'une quelconque des revendications précédentes, **caractérisé en ce que** la première partie de boîtier (4, 5) comprend un premier élément (4) et un deuxième élément (5) raccordé au premier élément (4), et **en ce que** la seconde partie de boîtier (6) comprend un troisième élément (6) comprenant la saillie de mise en prise (6), dans lequel le premier élément (4), le deuxième élément (5), la saillie de mise en prise (60) et les moyens d'étanchéité dynamiques (11) délimitent l'espace intérieur (7) scellé et isolé.

6. Actionneur de soupape (1) selon l'une quelconque des revendications 5, **caractérisé en ce que** des moyens d'étanchéité statiques (9) sont disposés entre le premier élément (4) et le deuxième élément (5).

7. Actionneur de soupape (1) selon la revendication 6, **caractérisé en ce que** les moyens d'étanchéité statiques (9) sont formés par un joint torique, un joint en X, un joint à lèvres, un moulage 2K solidaire du premier élément (5) et/ou du deuxième élément (6), un assemblage par soudage ou collage, et/ou un ajustement par encliquetage.

8. Actionneur de soupape (1) selon l'une quelconque des revendications précédentes, **caractérisé en ce que** les moyens d'alimentation électrique (20) sont guidés depuis l'extérieur de la première partie de boîtier (4, 5) dans l'espace intérieur (7) à travers la première partie de boîtier (4, 5).

9. Actionneur de soupape (1) selon la revendication 8 et l'une quelconque des revendications 5 à 7, **caractérisé en ce qu'**au moins l'un du premier élément (4) et du deuxième élément (5) comprend au moins une rainure (16) recoupant une zone de raccordement entre le premier élément (4) et le deuxième élément (5), les moyens d'alimentation électrique (20) étant guidés à travers l'au moins une rainure (16) de manière étanche.

10. Actionneur de soupape (1) selon la revendication 9, **caractérisé en ce que** l'au moins une rainure (16) s'étend au moins sensiblement parallèlement à l'axe longitudinal.

11. Actionneur de soupape (1) selon la revendication 6 et l'une quelconque des revendications 9 et 10, **caractérisé en ce que** les moyens d'étanchéité statiques (9) sont situés entre une face intérieure radiale (18) de l'un parmi le premier élément (4) et le deuxième élément (5) et une face extérieure radiale (17) de l'autre parmi le premier élément (4) et le deuxième élément (5), dans lequel au moins l'une parmi la face intérieure radiale (18) et la face extérieure radiale (17) comprend un ensemble saillie radiale (19) s'étendant parallèlement à l'au moins une rainure (16) et orienté radialement dans une direction vers l'autre parmi la face intérieure radiale (18) et la face extérieure radiale (17) pour presser le moyen d'alimentation électrique (20) dans l'au moins une rainure (16).

12. Actionneur de soupape (1) selon l'une quelconque des revendications 8 à 11, **caractérisé en ce que** les moyens d'alimentation électrique (20) sont pourvus de moyens d'étanchéité individuels (25, 26).

13. Actionneur de soupape (1) selon la revendication 12 et l'une quelconque des revendications 6 à 11, **caractérisé en ce que** les moyens d'étanchéité individuels (25, 26) sont solidaires des moyens d'étanchéité statiques (9).

14. Actionneur de soupape (1) selon l'une quelconque des revendications précédentes, **caractérisé en ce qu'**une section transversale de l'ouverture cylindrique (50) a une forme circulaire, elliptique, ovale ou de trou oblong.

15. Actionneur de soupape (1) selon l'une quelconque des revendications précédentes pour une soupape, **caractérisé en ce que** l'actionneur de soupape (1) comprend en outre des moyens de raccordement de soupape (62) destinés à fixer l'actionneur de soupape (1) à la soupape, dans lequel les moyens de raccordement de soupape (62) sont fournis à un côté d'extrémité de soupape de l'actionneur de soupape (1) dans la direction longitudinale, dans lequel l'ouverture cylindrique (50) de la première partie de boîtier (4, 5) est orientée vers le côté d'extrémité de soupape.
